# EUROPÄISCHE PATENTSCHRIFT

(11) **EP 1 101 395 B1**
(45) Veröffentlichungstag und Bekanntmachung des Hinweises auf die Patenterteilung: **08.12.2004**
(21) Anmeldenummer: 00124775.8
(22) Anmeldetag: 14.11.2000
(51) Int. Cl.: A01D 33/10

(54) **Vorrichtung zur Bestimmung des Ernteertrages beim Ernten bzw. Roden von Wurzelfrüchten, beispielsweise Zuckerrüben, sowie Erntefahrzeug mit einer solchen Vorrichtung**
Device for determining the crop yield in harvesting of rootcrops, e.g. sugar beet, and harvester with such a device
Dispositif pour la détermination du rendement de la récolte de racines, p.e. betteraves sucrières, et récolteuse avec un tel dispositif

(30) Priorität: 22.11.1999 DE 19956182; 03.12.1999 DE 19958318
(43) Veröffentlichungstag der Anmeldung: 23.05.2001
(73) Patentinhaber: Holmer Maschinenbau GmbH, 84069 Eggmühl (DE)
(72) Erfinder: Holmer, Alfons, 84069 Eggmühl (DE)
(74) Vertreter: Graf, Helmut, Dipl.-Ing.

(56) Entgegenhaltungen:
- EP-A- 0 791 287
- WO-A-99/60839
- WO-A-99/61871
- DE-A- 4 133 832
- DE-A- 19 523 026
- FR-A- 2 652 707
- US-A- 5 800 262

## Beschreibung

Die Erfindung bezieht sich auf eine Erntefahrzeug gemäß Oberbegriff Patentanspruch 1.

Bekannt sind Erntemaschinen oder -fahrzeuge, insbesondere auch solche zum Ernten von Wurzelfrüchten oder Zuckerrüben, wobei speziell diese bekannten Fahrzeuge an der Vorderseite ein Ernte- oder Rodeaggregat aufweisen und die geernteten Wurzelfrüchte über wenigsten eine Transportstrecke, die in Fahrzeuglängsrichtung unter dem Fahrzeugrahmen verläuft, an einem Aufwärtsförderer oder Elevator gefördert werden, über den die Wurzelfrüchte dann in einem am Fahrzeugrahmen vorgesehenen Bunker eingebracht werden.

Bekannt ist eine Vorrichtung zum Aufnehmen von Wurzelfrüchten mit einem Förderelement (DE 196 06 601 A1), welches beispielsweise als Aufwärtsförderer an einem Bunker für die Wurzelfrüchte an einem Erntefahrzeug vorgesehen ist. Zur Bestimmung des Ernteertrages stützt sich der Aufwärtsförderer bzw. dessen Hilfsrahmen über mehrere Kraftmeßzellen an dem Rahmen des Erntefahrzeugs ab, so daß die Kraftmeßzellen ein Meßsignal erzeugen, welches dem Gewicht des Aufwärtsförderers zuzüglich des Gewichtes der auf diesem sich befindlichen Wurzelfrüchten entspricht. Nachteilig ist hierbei u.a. daß gerade bei dem rauhen Einsatz beim Ernten oder Roden von Wurzelfrüchten u.a. in hohem Maße die Gefahr einer Anlagerung von Bodenbestandteilen oder -Klumpen oder anderen Fremdstoffen insbesondere auch am Hilfsrahmen des Aufsatzförderers besteht und durch diese Anlagerungen das Meßergebnis grob verfälscht wird.

In nicht vorveröffentlichten der älteren EP 0 958 729 A1 wird weiterhin vorgeschlagen, bei einer Erntemaschine zum Ernten von Getreiden oder ähnlichem Erntegut über dem Boden die Menge an geerntetem Erntegut durch Messen des Antriebsdrehmomentes einer umlaufenden Förderschnecke zu bestimmen, und zwar dadurch, daß eine im Antriebsstrang vorgesehene Kette über ein Kettenrad geführt ist und die auf dieses Kettenrad ausgeübten Kräfte von einem Sensor erfaßt werden.

Bekannt ist eine Vorrichtung zum Bestimmen des Volumens und des Gewichtes von geerntetem Getreide (US 5 800 262). Die Vorrichtung besteht im Wesentlichen aus einem Aufwärtsförderer, der über einen Hydraulikmotor angetrieben wird. Zur Bestimmung des Volumens wird der Hydraulikdruck an den beiden Anschlüssen des Hydraulikmotors gemessen.

Aufgabe der Erfindung ist es, ein Erntefahrzeug aufzuzeigen, bei dem in besonders einfacher und sehr zuverlässiger Weise eine Ertragsmessung während des Erntens auch kontinuierlich ermöglicht. Zur Lösung dieser Aufgabe ist ein Erntefahrzeug entsprechend dem Patentanspruch 1 ausgebildet.

Der Vorteil der Erfindung besteht u.a. darin, daß auch kontinuierlich eine Ertragsmessung oder -erfassung während des Erntens durchgeführt werden kann, und zwar beispielsweise als Datensatz für aneinander anschließende Ernteabschnitte vorgegebener Größe.

Bei einer bevorzugten Ausführungsform der Erfindung wird das von den Sensor-Mitteln gelieferte wenigstens eine Meß- oder Sensor-Signals in einer vorzugsweise rechnergestützten oder von einem Rechner gebildeten Elektronik zusammen mit von einer GPS-Einheit gelieferten Daten verarbeitet, die dem jeweiligen Ort der Vorrichtung bzw. der Erntemaschine entsprechen oder definieren.

Bei der Erfindung sind zahlreiche Varianten und Abwandlungen möglich, die jeweils gesondert oder aber auch in Verbindung mit anderen Varianten, auch mit Teilen davon verwendet sein können. So sind z.B. zwei Sensoren vorgesehen, von denen ein Sensor den Druck des Hydraulik-Mediums am Hydraulikeingang des ersten Antriebs und ein Sensor den Druck des Hydraulik-Mediums am Ausgang dieses Antriebs erfaßt. Weiterhin besteht die Möglichkeit, daß die Sensormittel zur Ermittlung des Antriebsdrehmomentes wenigstens einen Sensor umfassen, der im Antriebsstrang zwischen dem Förderelement und einem zugehörigen Antrieb vorgesehen ist und hierbei das Drehmoment ermittelt.

Weitere Größen können über Sensormittel berücksichtigt werden, beispielsweise Fördergeschwindigkeit des Förderelementes und/oder Drehzahl des Antriebs für das Förderelement.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in Seitendarstellung ein Ernte- oder Rodefahrzeug zum Roden bzw. Ernten von Wurzelfrüchten, insbesondere Zuckerrüben;
- Fig. 2: in vereinfachter Darstellung und in einem Schnitt entsprechend der Linie I - I der Figur 1 einen Aufwärtsförderer des Fahrzeugs der Figur 1;
- Fig. 3: eine Darstellung ähnlich Figur 2, jedoch zusammen mit dem schematisch angedeuteten hydraulischen Antrieb für den Aufwärtsförderer und mit einer Bunker- oder Verteilerschnecke.

Das in den Figuren allgemein mit 1 bezeichnete Ernte- oder Rodefahrzeug dient zum Ernten oder Roden von Zuckerrüben 2 oder dergleichen Wurzelfrüchten und besteht in an sich bekannter Weise aus einem Rahmen 3, an welchem drei Fahrzeugachsen 4 - 6 mit entsprechenden Rädern 4' - 6' vorgesehen sind. Die Achsen sind lenkbar und zumindest die vordere Achse 4 und die hintere Achse 6 sind durch den Antrieb 7 des Fahrzeugs 1 angetrieben. Die mittlere Achse 5 ist anhebbar und absenkbar, so daß das Ernten oder Roden am Feld bei angehobener und das Fahren auf Wegen oder Straßen bei abgesenkter Achse 5 erfolgen kann.

An der Vorderseite des Rahmens 3 ist das eigentliche Rodeaggregat 8 vorgesehen, und zwar über Stellelemente, die bei der dargestellten Ausführungsform Hydraulikzylinder 9 und 10 sind, heb- und senkbar, so daß das Rodeaggregat 8 in bekannter Weise zum Fahren auf Straßen und Wegen sowie auch beim Wenden während des Rodens angehoben und für das Roden bzw. Ernten abgesenkt werden kann. An der Vorderseite des Rahmens 2 ist das Fahrerhaus 12 vorgesehen, auf welches dann zur Rückseite des Rahmens 3 hin der an seiner Oberseite offene Bunker 13 zur Aufnahme der geernteten Zuckerrüben 2 folgt.

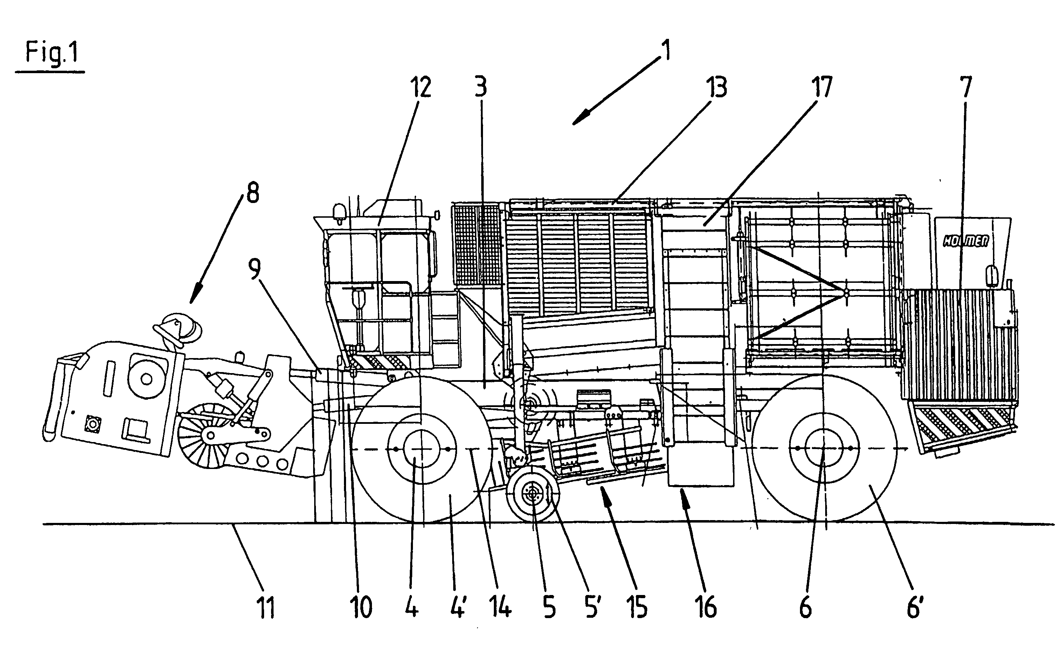

Das Roden der Zuckerrüben 2 erfolgt mit dem Rodeaggregat 8 in bekannter Weise gleichzeitig in mehreren Reihen. Die geernteten Zuckerrüben 2 gelangen dabei von dem Rodeaggregat 8 über eine Transportstrecke 14, die in der Figur 1 mit unterbrochenen Linien nur schematisch dargestellt ist und an der Unterseite des Rahmens 3 unterhalb des Fahrerhauses 12 in Rahmenlängsrichtung verläuft, sowie über eine weitere, anschließende Transportstrecke 15, die bei der dargestellten Ausführungsform von mehreren aufeinander folgenden und jeweils rotierend angetriebenen Siebsternen gebildet ist, an die Aufgabeposition 16 eines Elevators bzw. Aufwärtsförderers 17.

Der Aufwärtsförderer 17 besteht im wesentlichen aus zwei endlos umlaufend antreibbaren Gurten 18, die über mehrere Umlenkrollen oder Räder 19 - 23 derart geführt sind, daß jeder Gurt 18 jeweils eine in sich geschlossene Schlaufe bildet, die in einer vertikalen Ebene senkrecht zur Fahrzeuglängsachse angeordnet ist, wobei die beiden von den Gurten 18 gebildeten Schlaufen parallel zueinander und in Richtung der Fahrzeuglängsachse gegeneinander versetzt sind und beide Schlaufen von der Aufgabeposition 16 unterhalb des Rahmens 3 in Umlaufrichtung A folgenden Verlauf aufweisen:
- Zunächst von der Aufgabepostition 16 unterhalb des Rahmens 3 zu einer Fahrzeuglängsseite,
- dann über die Umlenkrollen 19 an dieser Fahrzeuglängsseite und außerhalb des Bunkers 13 nach oben an das Umlenkrad 20,
- dann über die offene Oberseite des Bunkers 13 schräg ansteigend bis zu den Umlenkrollen 21 etwa in der Mitte des Bunkers 13,
- dann über weitere Umlenkrollen 21 schräg nach unten, aber immer noch oberhalb des Bunkers an das Umlenk- oder Riemenrad 22,
- dann an der anderen Fahrzeuglängsseite in vertikaler Richtung nach unten, und zwar wiederum außerhalb des Bunkers 13, und
- schließlich nach der Umlenkrolle 23 unterhalb des Rahmens 2 im wesentlichen in horizontaler Richtung zurück an die Aufgabeposition 16.

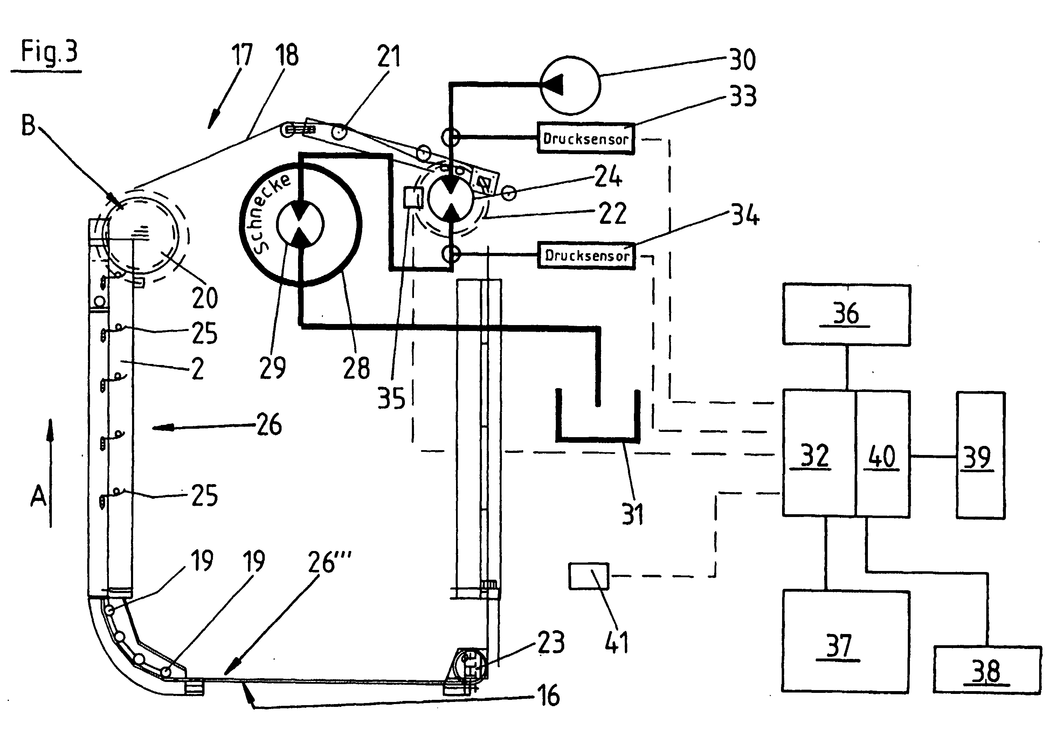

Allenfalls mit Ausnahme der als Spannrollen für den jeweiligen Gurt 18 dienenden Rollen 21 sind sämtliche Rollen bzw. Räder 19 - 23 für beide Gurte 18 jeweils achsgleich angeordnet. Über die Räder 22 sind beide Gurte 18 von einem Antrieb, der bei der in der Figur 3 wiedergegebenen Ausführungsform ein Hydraulikmotor 24 ist, synchron angetrieben. Zwischen den Gurten sind in gleichmäßigen Abständen Mitnehmer 25 vorgesehen, die über die der Schlaufenmitte zugewandte Innenseite der Gurte 18 wegstehen und Auflagen für die Zuckerrüben 2 bilden.

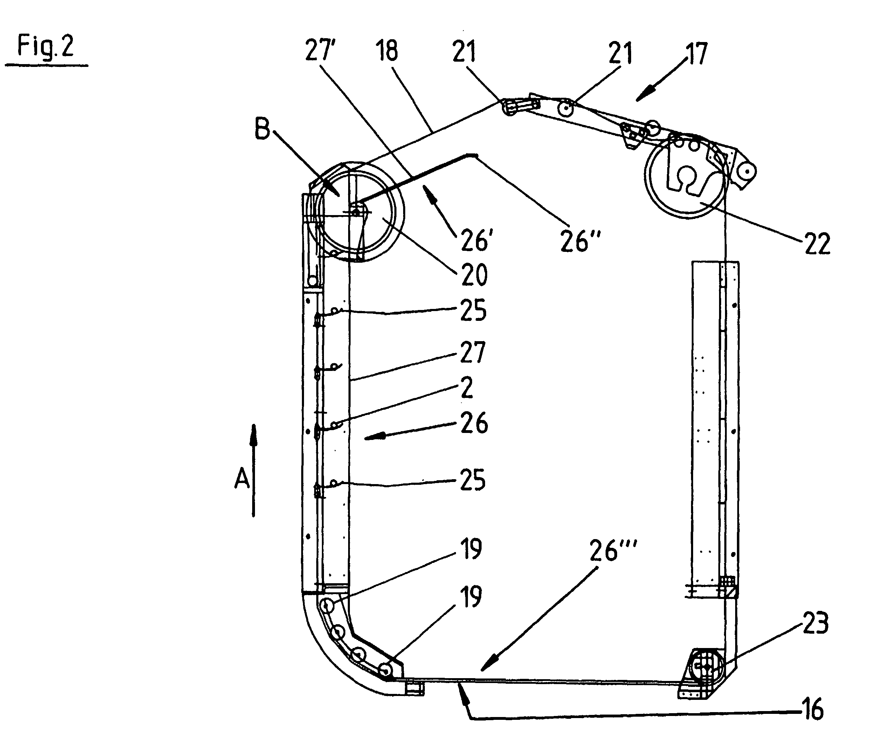

Zwischen der Aufgabeposition 16 und dem oberen Ende eines in den Figuren 2 und 3 mit 26 bezeichneten vertikalen Förderabschnittes, der zwischen der bezogen auf die Umlaufrichtung A letzten Umlenkrolle 19 und dem jeweiligen Umlenkrad 20 gebildet ist, bewegen sich die Mitnehmer innerhalb eines vertikalen Förder- oder Rübenkanals 27, der von wenigstens drei vertikalen Wandabschnitten begrenzt ist, und zwar jeweils von zwei seitlichen, in Ebenen senkrecht zur Fahrzeuglängsachse angeordneten Wandabschnitten und von einem innenliegenden, den freien Enden der Mitnehmer 25 benachbarten und parallel zur Fahrzeug- bzw. Bunkerlängsseite angeordneten Wandabschnitt. Diese Ausbildung des Aufwärtsförderers 17 ist dem Fachmann an sich bekannt, und zwar ebenso auch die Ausbildung der beiden Transportstrecken 14 und 15.

Eine Besonderheit des Aufwärtsförderers 17 besteht u.a. darin, daß der Rübenkanal 27 über die beiden Räder 20 verlängert ist, wie dies mit der Verlängerung 27' angedeutet ist, so daß sich an den Förderabschnitt 26 ein weiterer Förderabschnitt 26' anschließt und der Auswurf 26" für die Zuckerrüben 2 in den Bunker 13 sich oberhalb des Bunkerinnenraumes etwa in der Bunker- oder Fahrzeugmitte und auch oberhalb der Bunkerschnecke 28 befindet. Die Bunkerschnecke 28, die mit ihrer Achse in horizontaler Richtung und parallel zur Fahrzeuglängsachse oben im Bunker 13 vorgesehen ist, dient zum Verteilen der über den Auswurf 26"' in dem Bunker 13 eingebrachten Zuckerrüben 2 und wird hierfür durch einen eigenen Antrieb, nämlich den Hydraulikantrieb 29 angetrieben. Die Verlängerung 26' des Förderabschnittes 26 hat auch den Vorteil, daß die Zuckerrüben 2 an dem Auswurf 26" gefördert werden, ohne daß die Mitnehmer 25 mit im Bunker 13 vorhandenen Zuckerrüben 2 in Berührung kommen, was das Meßergebnis verfälschen würde.

In der Figur 3 ist mit 30 sehr schematisch das Hydraulik-Aggregat bezeichnet, welches u.a. die vom Fahrzeugantrieb 7 angetriebene Hydraulik-Pumpe sowie auch die notwendigen Steuerventile enthält. Weiterhin ist in der Figur 3 mit 31 der Tank für die hydraulische Flüssigkeit (Hydrauliköl) bezeichnet.

Angestrebt ist eine kontinuierliche Gewichtserfassung der geernteten Zuckerrüben 2 während des Erntevorgangs. Hierfür ist am Fahrzeug 1 eine Meß- und Auswertelektronik 32 mit einem Rechner vorgesehen. Dieser Elektronik sind bei der dargestellten Ausführungsform u.a. folgende Funktionselemente zugeordnet:
- Erster Drucksensor 33 am Einlaß des Hydraulikmotors 24 zum Antrieb des Aufwärtsförderers 17;
- Zweiter Drucksensor 34 am Hydraulik-Ausgang des Hydraulik-Motors 24;
- Sensor 35 zur Messung der Drehzahl der Antriebsräder 22 bzw. der zugehörigen Welle;
- GPS-Einrichtung 36 mit zugehöriger Antenne, Empfänger und Auswertelektronik zur satellitengenauen Bestimmung der jeweiligen Position des Fahrzeugs 1;
- Anzeigeeinrichtung oder Bildschirm 37;
- Tastatur 38 zur manuellen Eingabe insbesondere von Befehlen;
- Schnittstelle 39, insbesondere auch zum Auslesen von in einem Speicher 40 der Elektronik 32 gespeicherten Daten oder Datensätze.

Die Elektronik 32 berücksichtigt weiterhin auch, ob das Rodeaggregat 8 arbeitet oder aber beim Wenden des Fahrzeugs 1 oder beim Entleeren des Bunkers 13 abgeschaltet ist. Hierfür ist der Elektronik 32 in der Figur 3 schematisch ein weiterer Sensor 41 zugeordnet.

Die Ertragsmessung bzw. Gewichtserfassung erfolgt mittels der Elektronik 32 und den vorstehend genannten, der Elektronik zugeordneten Funktionselementen durch Ermittlung des Antriebs-Drehmomentes für den Aufwärtsförderer 17 und der Drehzahl, wobei diese Meßmethode davon ausgeht, daß das Antriebsdrehmoment eine Funktion des Gesamtgewichts der Zuckerrüben 2 ist, die sich jeweils in dem vertikalen Förderabschnitt 26 sowie auch in dem daran anschließenden, schräg nach oben verlaufenden Förderabschnitt 26' befinden. Die Elektronik 32 ermittelt aus der durch das Gewicht der Zuckerrüben 2 bedingten Komponente des Antriebsdrehmomentes und der Antriebsdrehzahl die geerntete bzw. in den Bunker 13 jeweils eingebrachte Zuckerrübenmenge.

Um diejenige Komponente des Antriebsdrehmomentes genau zu bestimmen, die tatsächlich von dem Gesamtgewicht der jeweils in den Förderabschnitten 26 und 26' befindlichen Zuckerrüben 2 bestimmt wird, wird am Beginn jeder Ertragsmessung, d.h. am Beginn jedes Erntevorgangs bei abgeschaltetem Rodeaggregat 8, aber auch während jeder Stillstandsszeit dieses Rodeaggregates 8, d.h. beim Wenden des Fahrzeugs 1 sowie beim Entleeren des Bunkers 13 bei weiterhin angetriebenem Aufwärtsförderer 17 das Antriebsdrehmoment im Leerlauf gemessen, so daß dann die durch das geförderte Gewicht der Zuckerrüben 2 bedingte Komponente des Antriebsdrehmomentes aus dem Gesamtdrehmoment sehr genau bestimmt werden kann. Durch häufige Messung des Leerlaufdrehmomentes bei jedem Abschalten oder Anheben des Rodeaggregates 8 können auch Änderungen des Leerlaufdrehmomentes, die durch äußere Einflüsse bedingt sind, beispielsweise durch eine von der Feldbeschaffenheit abhängige unterschiedliche Verschmutzung des Aufwärtsförderers 17, bei der Gewichtserfassung berücksichtigt werden.

Mit Hilfe des Sensors 41 wird der nicht aktive Zustand bzw. die jeweilige Stillstandszeit des Rodeaggregates 8, beispielsweise der Zustand "Rodeaggregat 8 angehoben bzw. ausgehoben" erfaßt und der Elektronik 32 mitgeteilt, die dann automatisch die Bestimmung des Leerlaufdrehmomentes und damit den Nullabgleich vornimmt. Dieser automatische Nullabgleich während der Stillstandszeit erfolgt somit ohne Zutun des Fahrers des Erntefahrzeugs 1, d.h. dieser wird nicht zusätzlich belastet. Da der Nullabgleich automatisch an den ohnehin nicht vermeidbaren Stillstandszeiten erfolgt, ergeben sich keine zusätzlichen Stillstandszeiten.

Die aus dem Antriebsdrehmoment und der Antriebsdrehzahl des Aufwärtsförderers 17 unter Berücksichtigung des jeweiligen Leerlaufdrehmomentes ermittelten Meßwerte oder Daten werden mit den von der GPS-Einheit 36 gelieferten Daten beispielsweise derart verarbeitet, daß die Meßwerte der Ertragsmessung jeweils für einen Ernte- oder Rodeabschnitt einer bestimmten Länge aufsummiert und zusammen mit der genauen Position dieses Abschnittes im Speicher 40 abgespeichert werden, so daß dann beispielsweise anhand der an der Schnittstelle 39 ausgelesenen Daten nicht nur die Gesamtmenge an geernteten Zuckerrüben 2 mit einem PC oder Rechner bestimmt werden kann, sondern auch eine Auswertung der Verteilung der Ernteerträge bezogen auf die jeweilige Lage in einem Feld möglich ist, um so zukünftig den Einsatz von Düngemitteln und/oder Mitteln zur Bodenverbesserung und/oder Pflanzenschutzmitteln zu optimieren.

Bei der in der Figur 3 dargestellten Ausführungsform erfolgt die Messung des Antriebsdrehmomentes durch die beiden Drucksensoren 33 und 34. Die Druckdifferenz des hydraulischen Mediums am Hydraulikeingang und Hydraulikausgang des Hydraulikmotors 24 ist proportional zum Antriebsdrehmoment. Die Messung der Drehzahl erfolgt über den Drehzahlmesser 35.

Selbstverständlich können auch andere, dem Fachmann bekannte Mittel oder Meßmethoden zur Messung des Antriebsdrehmomentes und/oder der Drehgeschwindigkeit verwendet werden, so beispielsweise zur Messung des Antriebsdrehmomentes eine Drehmoment-Meßsonde im Antriebsstrang zwischen den Antrieb des Aufwärtsförderers 17 und den beiden Antriebsrädern 22, oder aber bei einem elektrischen Antrieb für den Aufwärtsförderer 17 beispielsweise die Erfassung des Stromes oder der Leistung des Antriebsmotors. Weiterhin ist es beispielsweise auch möglich, zur Gewichtserfassung bzw. zur Bestimmung des Ernteertrages die beispielsweise auf die Umlenkrolle 20 oder auf eine andere Umlenkrolle durch das Gewicht der Zuckerrüben 2 in dem Förderabschnitt 26 oder auch im Förderabschnitt 26' ausgeübte Kraft (Pfeil B der Figur 3) zu erfassen, beispielsweise durch einen Dehnmeßstreifen.

Wie vorstehend ausgeführt, werden die geernteten Zuckerrüben 2 der Aufgabeposition 16 des Aufwärtsförderers 17 über die von dem Siebsternen gebildete Transportstrecke 15 zugeführt, an der an den Zuckerrüben 2 anhaftende Erdreste weitestgehend entfernt werden. Da die Gewichts- oder Ertragsmessung erst in dem anschließenden Aufwärtsförderer 17 erfolgt, ist gewährleistet, daß das Meßergebnis nicht durch Erdreste verfälscht wird. Wie aus den Figuren 2 und 3 ersichtlich ist, erfolgt weiterhin die Übergabe der Zuckerrüben 2 von der Transportstrecke 15 an den Aufwärtsförderer 17 an der Aufgabeposition 16, die sich noch in einem den Förderabschnitt 26 vorausgehenden im wesentlichen horizontalen Förderabschnitt 26"" befindet, wodurch nicht nur eine zuverlässige Übergabe der Zuckerrüben 2 gewährleistet ist, sondern auch gewährleistet ist, daß Impulse oder Kräfte, die beim Auftreffen der Zuckerrüben 2 auf den Aufwärtsförderer 17 unvermeidlich sind, das Meßergebnis nicht verfälschen können.

Die Erfindung wurde voranstehend an einem Ausführungsbeispiel beschrieben. Es versteht sich, daß weitere Änderungen sowie Abwandlungen möglich sind, ohne daß dadurch der der Erfindung zugrundeliegende Erfindungsgedanke verlassen wird.

### Bezugszeichenliste

- 1: Fahrzeug
- 2: Zuckerrübe
- 3: Fahrzeugrahmen
- 4,5,6: Fahrzeugachse
- 4', 5', 6': Fahrzeugrad
- 7: Fahrzeugantrieb
- 8: Rodeaggregat
- 9, 10: Hydraulikzylinder
- 11: Untergrund
- 12: Fahrerhaus
- 13: Bunker
- 14, 15: Transportstrecke
- 16: Aufgabeposition
- 17: Aufwärtsförderer
- 18: Gurt
- 19-23: Umlenkrolle- oder rad
- 24: Hydraulikmotor
- 25: Mitnehmer
- 26, 26': Förderabschnitt
- 27, 27': Förder- oder Rübenkanal
- 28: Bunkerschnecke
- 29: Hydraulikmotor
- 30: Hydraulikaggregat
- 31: Tank
- 32: Elektronik
- 33, 34, 35: Sensor
- 36: GPS-Einheit
- 37: Bildschirm
- 38: Tastatur
- 39: Schnittstelle
- 40: Speicher
- 41: Sensor

## Patentansprüche

1. Erntefahrzeug zum Ernten von Wurzelfrüchten, beispielsweise Zurckerrüben (2), mit einem Aufwärtsförderer (17) für die Wurzelfrüchte, der von wenigstes einem Förderelement (18, 25)gebildet ist und wenigstens einen Förderabschnitt (26, 26') besitzt, dessen Förderrichtung (A) zumindest eine vertikale Komponente aufweist, mit einem ersten in einem Hydraulikkreis mit Hydraulikaggregat (30) angeordneten hydraulischen Antieb (24) für das wenigstens eine Förderelement (18, 25), mit einem Bunker (13) zur Aufnahme des Erntegutes, und mit einer Vorrichtung zur Bestimmung des Ernteertrages, die Sensor-Mittel (33, 34) zur Erzeugung wenigstens eines Meß- oder Sensor-Signals aufweist, welches abhängig ist vom Massengewicht der in dem wenigstens einem Förderabschnitt (26, 26') jeweils angeordneten Wurzelfrüchte, **dadurch gekennzeichnet, daß** der erste hydraulische Antrieb (24) im Hydraulikreis in Serie mit einem zweiten hydraulische Antrieb (29) für eine Verteilerschnecke (28) des Bunkers (13) angeordnet ist, und daß die Sensor-Mittel (33, 34) ein der Druckdifferenz des Hydraulik-Mediums zwischen dem Hydraulik-Eingang und dem Hydraulik-Ausgang des Antriebs (24) entsprechendes Meß- oder Sensor-Signal erzeugen.

2. Erntefahrzeug nach Anspruch 1, **dadurch gekennzeichnet**, die Sensor-Mittel wenigstens einen die Fördergeschwindigkeit des Förderelementes (18, 25) und/oder die Drehzahl des Antriebs (24) erfassenden Sensor (35) aufweisen.

3. Erntefahrzeug nach Anspruch 1 oder 2, **dadurch gekennzeichnet, daß** die Sensor-Mittel wenigstens zwei Sensoren (33, 34) aufweisen, von denen einer den Druck des Hydraulik-Mediums am Hydraulik-Eingang des Antriebs (24) und einer den Druck des Hydraulik-Mediums am Hydraulik-Ausgang des Antriebs (24) erfaßt.

4. Erntefahrzeug nach einem der vorhergehenden Ansprüche, **dadurch gekennzeichnet, daß** daß der erste Antrieb (24) zwischen dem Hydraulikaggregat und dem zweiten Antrieb (29) vorgesehen ist.

5. Erntefahrzeug nach einem der vorhergehenden Ansprüche, **dadurch gekennzeichnet, daß** das wenigstens eine Förderelement von einer Vielzahl von Mitnehmern (25) gebildet ist, die an wenigstens einem endlos umlaufenden Transportelement (18) vorgesehen sind,
wobei das Transportelement beispielsweise von wenigstens zwei endlos umlaufenden Ketten und/oder Gurten (18) gebildet ist.

6. Erntefahrzeug nach einem der vorhergehenden Ansprüche, **dadurch gekennzeichnet, daß** der Aufwärtsförderer (17) ein an einem Erntefahrzeug (1) im Bereich des Bunkers (13) vorgesehener Förderer bzw. Elevator zum Einbringen der geernteten Wurzelfrüchte (2) in den Bunker (13) ist,
wobei der Aufwärtsförderer (17) beispielsweise wenigstens zwei in Förderrichtung aneinander anschließende Förderabschnitte (26, 26') aufweist, von denen der eine in vertikaler Richtung an der Außenseite des Bunkers (13) vorgesehen ist und der andere, anschließende Förderabschnitt (26') an einen Auswurf (26") im Bereich der geöffneten Oberseite des Bunkers (13) führt.

7. Emtefahrzeug nach einem der vorhergehenden Ansprüche, **dadurch gekennzeichnet, daß** der Aufwärtsförderer (17) ein Aufwärtsförderer eines Überladers oder einer Überlademaschine ohne Bunker ist.

8. Erntefahrzeug nach einem der vorhergehenden Ansprüche, **dadurch gekennzeichnet, daß** die Wurzelfrüchte (2) dem Aufwärtsförderer (17) bzw. einer Aufgabeposition (16) dieses Aufwärtsförderers über eine Transportstrecke (15) zugeführt werden, die das Entfernen von an den Wurzelfrüchten (2) haftenden Erdresten bewirkt, wobei diese Transportstrecke (15) vorzugsweise von wenigstens einem Siebstern gebildet ist.

9. Erntefahrzeug nach einem der vorhergehenden Ansprüche, **gekennzeichnet durch** eine mit den Sensor-Mitteln (33, 34, 35) zusammenwirkende Meß- und Auswertelektronik (32), der das wenigstens eine Meß- oder Sensor-Signal zugeführt wird und die aus dem Meß- oder Sensor-Signal gewonnene Ertragsdaten in einem Speicher (40) für eine weitere Verwendung abspeichert.

10. Erntefahrzeug nach einem der vorhergehenden Ansprüche, **dadurch gekennzeichnet, daß** die Elektronik (32) die Ertragsdaten als Datensatz mit Einzeldaten für jeweils vorgegebenen Ernte- oder Feld-Abschnitte abspeichert und/oder bei Ermittlung der Ertragsdaten aus dem Meß- oder Sensor-Signal auch ein der Leerlauf-Antriebsleistung und/oder dem Lehrlauf-Antriebsdrehmoment entsprechendes weiteres Meß- oder Sensor-Signal berücksichtigt, wobei beispielsweise die Elektronik (32) automatisch bei einem Leerlauf eines Ernte- oder Rodeaggregates (8) der Erntemaschine (1) das Leerlauf-Antriebsdrehmoment und/oder die Leerlauf-Antriebsleistung erfaßt.

11. Erntefahrzeug nach einem der vorhergehenden Ansprüche, **gekennzeichnet durch** eine mit der Elektronik (32) zusammenwirkende GPS-Einheit (32), wobei die Elektronik (32) die Ertragsdaten in Abhängigkeit von der Position des Erntefahrzeugs ermittelt und abspeichert.

## Claims

1. Harvesting vehicle for harvesting root vegetables, for example sugar beet (2), with a upward conveyor (17) for the root vegetables, which is formed of at least one conveyor element (18, 25) and has at least one conveyor section (26, 26'), whose conveyor direction (A) has at least one vertical component, with a first hydraulic drive (24) which is arranged in a hydraulic circuit with hydraulic aggregate (30) and which is for the at least one conveyor element (18, 25), with a bunker (13) for receiving the harvested produce, and with a device for determining the harvest yield, which has sensor elements (33, 34) for producing at least one measurement signal or sensor signal which is dependent on the mass weight of the root vegetables respectively arranged in the at least one conveyor section (26, 26'),
**characterised in that**
the first hydraulic drive (24) is arranged in the hydraulic circuit in series with a second hydraulic drive (29) for a distribution spiral conveyor (28) of the bunker (13), and that the sensor elements (33, 34) create a measurement signal or sensor signal that corresponds to the pressure difference of the hydraulic medium between the hydraulic input and the hydraulic output of the drive (24).

2. Harvesting vehicle in accordance with claim 1, **characterised in that** the sensor elements have at least one sensor (35) that records the conveyor speed of the conveyor element (18, 25) and/or the rotational speed of the drive (24).

3. Harvesting vehicle in accordance with claim 1 or 2, **characterised in that** the sensor elements have at least two sensors (33, 34) one of which records the pressure of the hydraulic medium at the hydraulic input of the drive (24) and one of which records the pressure of the hydraulic medium at the hydraulic output of the drive (24).

4. Harvesting vehicle in accordance with one of the preceding claims,
**characterised in that** the first drive (24) is provided between the hydraulic aggregate and the second drive (29).

5. Harvesting vehicle in accordance with one of the preceding claims,
**characterised in that** the at least one conveyor element is formed by numerous carriers (25) that are provided on at least one endlessly circulating transportation element (18), wherein the transportation element is for example formed by at least two endlessly circulating chains and/or belts (18).

6. Harvesting vehicle in accordance with one of the preceding claims,
**characterised in that** the upward conveyor (17) is a conveyor or elevator provided on a harvesting vehicle (1) in the vicinity of the bunker (13), for bringing the harvested root vegetables (2) into the bunker (13),
wherein the upward conveyor (17) for example has at least two conveyor sections (26, 26') which follow on from one another in the direction of conveyance, one of which is provided in the vertical direction on the outer side of the bunker (13), and the other section (26') that follows on leads to a discharge point (26") in the vicinity of the opened upper side of the bunker (13).

7. Harvesting vehicle in accordance with one of the preceding claims,
**characterised in that** the upward conveyor (17) is an upward conveyor of a material handler or material-handling machine without a bunker.

8. Harvesting vehicle in accordance with one of the preceding claims,
**characterised in that** the root vegetables (2) are supplied to the upward conveyor (17) or to a feeder position (16) of this upward conveyor via a transportation section (15) which effects the removal of the soil residues clinging to the root vegetables (2), wherein this transportation section (15) is preferably formed by at least one screening star.

9. Harvesting vehicle in accordance with one of the preceding claims,
**characterised by** an electronics unit (32) for measurement and evaluation which works together with the sensor elements (33, 34, 35), and to which the at least one measurement signal or sensor signal is supplied, and which stores the yield data obtained from the measurement signal or sensor signal in a memory (40) for further use.

10. Harvesting vehicle in accordance with one of the preceding claims,
**characterised in that** the electronics unit (32) stores the yield data as a data record with individual data for harvest sections or field sections that have been set respectively, and/or when establishing the yield data from the measurement signal or sensor signal also takes account of a further measurement signal or sensor signal that corresponds to the idle-running drive output and/or the idle-running drive torque, wherein for example the electronics unit (32) automatically records the idle-running drive output and/or the idle-running drive torque when a harvester aggregate or digging aggregate (8) of the harvesting machine (1) is running idle.

11. Harvesting vehicle in accordance with one of the preceding claims,
**characterised by** a GPS unit (32) that works together with the electronics unit (32), wherein the electronics unit (32) establishes and stores the yield data depending on the position of the harvesting vehicle.

## Revendications

1. Récolteuse pour récolter des plantes à racines ou tubercules, par exemple des betteraves sucrières (2), comprenant un transporteur ascendant (17) pour les tubercules qui est formé d'au moins un élément de transport (18,25) et possède au moins une section de transport (26,26'), dont la direction de transport (A) présente au moins une composante verticale, une première commande hydraulique (24) agencée dans un circuit hydraulique avec un bloc hydraulique (30) pour le au moins un élément de transport (18,25), un réservoir (13) pour la réception du produit de la récolte, et un dispositif pour déterminer le rendement de la récolte, qui présente des moyens capteurs (33,34) pour produire au moins un signal de mesure ou de capteur, qui est fonction du poids massique des tubercules respectivement disposées dans la au moins une section de transport (26,26'), **caractérisée en ce que** la première commande hydraulique (24) est agencée dans le circuit hydraulique en série avec une seconde commande hydraulique (29) pour un vis sans fin de distribution (28) du réservoir (13) et **en ce que** les moyens capteurs (33,34) produisent un signal de mesure ou de capteur correspondant à la différence de pression du milieu hydraulique entre l'entrée hydraulique et la sortie hydraulique de la commande (24).

2. Récolteuse selon la revendication 1, **caractérisée en ce que** les moyens capteurs présentent au moins un capteur (35) détectant la vitesse de transport de l'élément de transport (18,25) et/ou le nombre de tours de la commande (24).

3. Récolteuse selon la revendication 1 ou 2, **caractérisée en ce que** les moyens capteurs présentent au moins deux capteurs (33,34), dont l'un saisit la pression du milieu hydraulique à l'entrée hydraulique de la commande (24) et l'autre saisit la pression du milieu hydraulique à la sortie hydraulique de la commande (24).

4. Récolteuse selon l'une quelconque des revendications précédentes, **caractérisée en ce que** la première commande (24) est aménagée entre le bloc hydraulique et la seconde commande (29).

5. Récolteuse selon l'une quelconque des revendications précédentes, **caractérisée en ce que** le au moins un élément de transport est formé d'une pluralité d'éléments d'entraînement (25) qui sont aménagés sur au moins un élément de transport (18) tournant sans fin, l'élément de transport étant, par exemple, formé d'au moins deux chaînes et/ou courroies (18) tournant sans fin.

6. Récolteuse selon l'une quelconque des revendications précédentes, **caractérisée en ce que** le transporteur ascendant (17) est un transporteur ou élévateur aménagé sur une récolteuse (1) dans la zone du réservoir (13) pour amener les tubercules récoltées (2) dans le réservoir (13), le transporteur ascendant (17) présentant, par exemple, au moins deux sections de transport (26,26') se raccordant l'une à l'autre dans le sens de transport, dont l'une (26) est aménagée dans la direction verticale sur le côté extérieur du réservoir (13) et dont l'autre section de transport adjacente (26') conduit à un éjecteur (26") dans la zone de la partie supérieure ouverte du réservoir (13).

7. Récolteuse selon l'une quelconque des revendications précédentes, **caractérisée en ce que** le transporteur ascendant (17) est un transporteur ascendant d'un transbordeur ou d'une machine de transbordement sans réservoir.

8. Récolteuse selon l'une quelconque des revendications précédentes, **caractérisée en ce que** les tubercules (2) sont acheminées au transporteur ascendant (17) ou dans une position de chargement (16) de ce transporteur ascendant via une voie de transport (15), qui effectue la séparation des restants de terre adhérant aux tubercules (2), cette voie de transport (15) étant de préférence formée d'au moins une étoile de tamisage.

9. Récolteuse selon l'une quelconque des revendications précédentes, **caractérisée par** un système électronique de mesure et d'exploitation (32) coopérant avec les moyens capteurs (33,34,35), système auquel est acheminé le au moins un signal de mesure ou de capteur et qui enregistre les données de rendement tirées du signal de mesure ou de capteur dans une mémoire (40) pour une utilisation ultérieure.

10. Récolteuse selon l'une quelconque des revendications précédentes, **caractérisée en ce que** le système électronique (32) enregistre les données de rendement sous la forme d'un jeu de données avec des données individuelles pour des sections de champ ou de récolte respectivement prédéterminées et/ou prend également en compte, lors de la détermination des données de rendement à partir du signal de mesure ou de capteur, un autre signal de mesure ou de capteur correspondant à la puissance motrice à vide et/ou au couple moteur à vide, le système électronique (32) saisissant, par exemple, automatiquement lors d'un fonctionnement à vide d'un bloc de récolte ou d'arrachage (8) de la récolteuse (1), la puissance motrice à vide et/ou le couple moteur à vide.

11. Récolteuse selon l'une quelconque des revendications précédentes, **caractérisé par** une unité GPS (32) coopérant avec le système électronique (32), le système électronique (32) déterminant et enregistrant les données de rendement en fonction de la position de la récolteuse.
